# EUROPÄISCHE PATENTSCHRIFT

(11) **EP 4 086 521 B1**
(45) Veröffentlichungstag und Bekanntmachung des Hinweises auf die Patenterteilung: **11.06.2025**
(21) Anmeldenummer: 22166647.2
(22) Anmeldetag: 05.04.2022
(51) Int. Cl.: F24C 7/08, A47J 36/00

(54) **VERFAHREN ZUM BETREIBEN EINES HAUSHALTGERÄTESYSTEMS UND HAUSHALTGERÄTESYSTEM**
DOMESTIC APPLIANCE SYSTEM AND METHOD FOR OPERATING A DOMESTIC APPLIANCE SYSTEM
PROCÉDÉ DE FONCTIONNEMENT D'UN SYSTÈME D'APPAREIL ÉLECTROMÉNAGER ET SYSTÈME D'APPAREIL ÉLECTROMÉNAGER

(30) Priorität: 05.05.2021 DE 102021111581; 17.06.2021 BE 202105473
(43) Veröffentlichungstag der Anmeldung: 09.11.2022
(73) Patentinhaber: Miele & Cie. KG, 33332 Gütersloh (DE)
(72) Erfinder: Hölscher, Britta, 30167 Hannover (DE); Ennen, Volker, 32257 Bünde (DE)

(56) Entgegenhaltungen:
- EP-A1- 3 668 274
- CN-A- 108 006 750
- CN-A- 108 451 400
- FR-A1- 3 098 677
- JP-A- 2018 194 284
- JP-A- 2019 027 635

## Beschreibung

Die vorliegende Erfindung betrifft ein Verfahren zum Betreiben eines Haushaltgerätesystems, welches wenigstens eine mobile Bedieneinrichtung, wenigstens eine Steuereinrichtung und wenigstens ein Haushaltgerät aufweist, wobei das Haushaltgerät wenigstens eine Sende-/Empfangseinrichtung und wenigstens eine erste Sensoreinrichtung zur Detektion wenigstens einer Handlung umfasst und wobei die mobile Bedieneinrichtung wenigstens eine Kommunikationseinrichtung und wenigstens eine zweite Sensoreinrichtung zur Detektion wenigstens einer Handlung umfasst. Dabei sind die wenigstens eine Sende-/Empfangseinrichtung und die wenigstens eine Kommunikationseinrichtung dazu geeignet und ausgebildet, wenigstens zeitweise drahtlos miteinander und/oder mit der wenigstens einen Steuereinrichtung über wenigstens einen ersten Kommunikationskanal drahtlos zu kommunizieren, wobei wenigstens eine Eigenschaft und/oder eine Funktion des Haushaltgerätes mittels der Bedieneinrichtung einstellbar ist. Die vorliegende Erfindung betrifft zudem ein Haushaltgerät, welches dazu geeignet und ausgebildet ist, ein solches Verfahren auszuführen.

Haushaltgeräte weisen typischerweise eine Vielzahl von unterschiedlichsten Bedien- und/oder Anzeigeelementen auf, um das jeweilige Haushaltgerät zu steuern bzw. gerätespezifische Funktionen und Eigenschaften auszuwählen und/oder zu kontrollieren. Oft sind diese Bedien- und/oder Anzeigeelementen aber nicht ortsfest an dem Haushaltgerät aufgenommen bzw. von dem Haushaltgerät umfasst, sondern sie werden von einer mobilen Fernbedienung bereitgestellt, mittels welcher das Haushaltgerät aus der Ferne bedient bzw. gesteuert werden kann. Solche Systeme aus wenigstens einem Haushaltsgerät und wenigstens einer Fernbedienung werden vor allem dann eingesetzt, wenn ein besonders ansprechendes optisches Design des Haushaltgerätes ohne Bedienelemente erzielt werden soll und/oder wenn die Oberfläche des Haushaltgerät nicht genügend Platz bzw. Raum zur Aufnahme der Bedien- und/oder Anzeigeelementen bietet, um diese übersichtlich anzuordnen und gerätespezifische Funktionen und Eigenschaften benutzerfreundlich anzuzeigen.

Aus der Druckschrift JP 2018 194284 A ist die Bedienung eines Kochfeldes mittels Fingergesten bekannt, wobei die Fingergesten auf einer Projektionsfläche von einem optischen Sensor erfasst werden.

Aus der Druckschrift FR 3 098 677 A1 ist beispielsweise eine Bedienung eines Kochfeldes mit einem mobilen Bedienelement bekannt.

Aus der Druckschrift CN 108 451 400 A ist ein Gerät zur Nahrungsbehandlung bekannt, welches über eine Gestenerkennung bedient werden kann.

Aus der Druckschrift CN 108 006 750 A ist ein Kochfeld bekannt, welches über berührungsfreie Steuerungskonzepte betrieben wird.

Aus der Druckschrift JP 2019 027 635 A ist ein Kochfeld mit einer automatischen Topferkennung bekannt, welches einen Vibrationssensor aufweist.

Aus Druckschrift US2020349860A1 ist ein Bedienkonzept bekannt, welches eine Smartwatch nutzt.

Insbesondere bei Haushaltgerätesystemen mit einem Haushaltgerät, von dem eine gewisse Gefahr für einen Benutzer ausgeht, wie z. B. einem Kochfeld, einem Kochgeschirr und/oder einer Rühreinrichtung bzw. einem Mixer, ist es nötig, die gesetzlich vorgeschriebene räumliche Nähe des Benutzers zu überprüfen und somit sicherzustellen, dass eine Bedienung des Haushaltgerätes aus der Ferne ausgeschlossen ist.

Bei bekannte Haushaltgerätesysteme und Verfahren zum Betreiben solcher Haushaltgerätesysteme, müssen daher oft Steuerbefehle mittels am und/oder in der Nähe des Haushaltgerätes angeordneter Bedienelemente bestätigt werden und/oder es werden zur Erhöhung der Sicherheit bzw. der Zuverlässigkeit mehrere Kommunikationskanäle zur Kommunikation zwischen Fernbedienung und Haushaltgerät genutzt. Jedoch sind in diesen Fällen die Sicherheits- bzw. die Zuverlässigkeitsvorkehrungen je nach Ausgestaltung in der Benutzung zu umständlich und aufwendig, um allgemein von Benutzern akzeptiert zu werden. Somit ist es in Hinblick auf Sicherheit und Praxistauglichkeit solcher fernsteuerbarer bzw. fernbedienbarer Haushaltgeräte wünschenswert, die bekannten Lösungen weiter zu verbessern und die Bedienung als solche intuitiver zu gestalten, sodass diese insbesondere auch von neuen Benutzern schnell und einfach zu lernen und durchzuführen ist.

Es ist daher die Aufgabe der vorliegenden Erfindung, ein Verfahren zum Betreiben eines Haushaltgerätesystems zur Verfügung zu stellen, welches einen besonders sicheren und insbesondere intuitiven benutzerfreundlichen Betrieb eines Haushaltgerätesystems ermöglicht. Diese Aufgabe wird gelöst durch ein Verfahren zum Betreiben eines Haushaltgerätesystems mit den Merkmalen des Anspruchs 1 und durch ein Haushaltgerätesystem mit den Merkmalen des Anspruches 10. Bevorzugte Weiterbildungen der Erfindung sind Gegenstand der abhängigen Ansprüche. Weitere Vorteile und Merkmale der Erfindung ergeben sich aus den Ausführungsbeispielen.

Das erfindungsgemäße Verfahren eignet sich zum Betreiben eines Haushaltgerätesystems umfassend wenigstens eine mobile Bedieneinrichtung, wenigstens eine Steuereinrichtung und wenigstens ein Haushaltgerät. Dabei umfasst das Haushaltgerät wenigstens eine Sende-/Empfangseinrichtung und wenigstens eine erste Sensoreinrichtung zur Detektion wenigstens einer Handlung umfasst, wobei die mobile Bedieneinrichtung wenigstens eine Kommunikationseinrichtung und wenigstens eine zweite Sensoreinrichtung zur Detektion wenigstens einer Handlung umfasst. Die wenigstens eine Sende-/Empfangseinrichtung und die wenigstens eine Kommunikationseinrichtung sind dazu geeignet und ausgebildet, wenigstens zeitweise drahtlos miteinander und/oder mit der wenigstens einen Steuereinrichtung über wenigstens einen ersten Kommunikationskanal drahtlos zu kommunizieren, wobei wenigstens eine Eigenschaft und/oder eine Funktion des Haushaltgerätes mittels der Bedieneinrichtung einstellbar ist. Dabei ist das Haushaltgerät mittels der Bedieneinrichtung wenigstens zeitweise steuerbar, wenn die wenigstens eine Bedieneinrichtung in einem vorbestimmten Abstand zu dem wenigstens einem Haushaltgerät angeordnet wird und wenn wenigstens die erste und die zweite Sensoreinrichtung jeweils wenigstens eine vorbestimmte Handlung detektieren.

Dabei ist erfindungsgemäß vorgesehen, dass die erste und/oder die zweite Sensoreinrichtung wenigstens einen Beschleunigungssensor und/oder ein Bewegungssensor und/oder ein Erschütterungssensor umfasst, welcher wenigstens eine vorbestimmte Handlung detektiert. Hierbei wird eine vom Benutzer ausgehenden Bewegung erfasst, insbesondere eine Bewegung der mobilen Bedieneinrichtung mit dem Benutzer.

Basierend auf der Erfassung der Bewegung des Benutzers in Form einer vorbestimmten Handlung, wie eine Berührung des Haushaltgeräts, die insbesondere ein Streicheln und/oder ein Streichen und/oder ein Klopfen und/oder ein Antippen ist, kann eine Korrelation, zwischen der der mobilen Bedieneinrichtung und dem Haushaltgerät hergestellt werden. Dies ist möglich, da die vorbestimmte Handlung gleichermaßen von der Sensoreinrichtung des Haushaltgeräts und von der Sensoreinrichtung der mobilen Bedieneinrichtung erfasst wird. Beispielsweise ein Klopfen an einer Backofentür oder verschieben eines Gargefäßes, wird von separaten Sensoren separater Vorrichtungen zum selben Zeitpunkt erfasst und ermöglicht daher eine Validierung der Nähe beider Vorrichtungen. So kann dann eine Bedieneingabe oder eine Prozessbestätigung manuell an das Haushaltgerät übermittelt oder bestätigt werden.

Alternativ kann, basierend auf der Erfassung der Bewegung des Benutzers in Form einer vorbestimmten Handlung, eine gerichtete Annäherung bzw. hinführende Bewegung des Benutzers herangezogen werden, um diese Validierung zu ermöglichen. Mittels der vom Benutzer bewegten Sensoreinrichtung der mobilen Bedieneinrichtung wird eine Raumbewegung erfasst, aus welcher ein Bewegungsvektor angeleitet werden kann. Ist dieser Bewegungsvektor auf den Standort des Haushaltgeräts ausgerichtet, dann wird deutlich an welches Haushaltgerät eine Bedieneingabe oder eine Prozessbestätigung manuell übermittelt oder für welches sie bestätigt wird.

Vorzugsweise wird die wenigstens eine Bedieneinrichtung in einem vorbestimmten Abstand zu dem wenigstens einen Haushaltgerät angeordnet und wenigstens die erste und die zweite Sensoreinrichtung detektieren jeweils wenigstens eine vorbestimmte Handlung, woraufhin eine wenigstens zeitweise Freigabe des Haushaltgeräts zur Bedienung bzw. zur Steuerung und eine wenigstens zeitweise Freigabe der Bedieneinrichtung zur Steuerung bzw. Bedienung erfolgt, sodass das Haushaltgerät mittels der Bedieneinrichtung bedienbar bzw. steuerbar ist.

Dabei ist ein Haushaltgerät insbesondere ein Kochgeschirr, eine Kochfeldeinrichtung und/oder eine Gareinrichtung wie ein Dampfgarer, eine Mikrowelle und/oder ein Backofen. Je nach Aufgabe und Ausgestaltung kann das Haushaltsgerät aber auch eine andere Geräteeinrichtung wie eine Waschmaschine, eine Spülmaschine oder ein Staubsauger sein.

Der vorbestimmte Abstand zwischen der Bedieneinrichtung und dem Haushaltgerät liegt vorzugsweise im Bereich von 1 cm bis 300 cm. Insbesondere ist der vorbestimmte Abstand kleiner als 2 m, vorzugsweise kleiner als 1,5 m, bevorzugt kleiner als 1 m, besonders bevorzugt kleiner als 0,5 m und ganz besonders bevorzugt kleiner als 20 cm oder noch kleiner.

Dabei kann die vorbestimmte Handlung insbesondere ein Streicheln bzw. Streichen, ein Klopfen, eine Berührung, ein Antippen, eine gerichtete Annäherung bzw. hinführende Bewegung und/oder eine andere bewusste und/oder eindeutig, insbesondere von einer Sensoreinrichtung wahrnehmbare Bewegung bzw. Handlung sein. Je nach Aufgabe und Ausgestaltung kann eine Handlung auch vorzugsweise ein akustisches Signal, insbesondere ein Sprachsignal sein.

Vorzugsweise ist wenigstens eine vorbestimmte Handlung eine Berührung einer Griffeinrichtung des Haushaltgerätes, insbesondere einer Griffeinrichtung eines Kochgeschirrs.

Der erste Kommunikationskanal kann insbesondere von einer Kommunikationseinrichtung auf der Basis von WLAN, ZigBee, IR, Bluetooth und/oder NFC bereitgestellt werden. Je nach Aufgabe und Ausgestaltung ist es vorzugsweise auch möglich, dass der erste Kommunikationskanal von einer akustischen Signalverbindung zur Übertragung wenigstens eines akustischen, insbesondere im Ultraschallbereich liegenden Signales bereitgestellt wird.

In vorteilhaften Weiterbildungen weist der erste Kommunikationskanal eine Reichweite bzw. Übertragungsreichweite von weniger als 2 m, vorzugsweise weniger als 1,5 m, bevorzugt weniger als 1 m, besonders bevorzugt weniger als 0,5 m und ganz besonders bevorzugt weniger als 20 cm insbesondere weniger als 3 cm oder vorzugsweise nur 1 cm auf. Insbesondere wird ein erster Kommunikationskanal mit einer solchen, insbesondere geringen Reichweite von einer IR, NFC und/oder akustischen Signalverbindung zur Übertragung wenigstens eines akustischen, insbesondere im Ultraschallbereich liegenden Signales bereitgestellt.

In zweckmäßigen Weiterbildungen kann der erste Kommunikationskanal auch eine Reichweite von mehr als 2 m, bevorzugt von mehr als 10 m und besonders bevorzugt von mehr als 100 m, oder noch mehr aufweisen. Insbesondere wird ein erster Kommunikationskanal mit einer solchen, insbesondere großen Reichweite von einer WLAN, einer ZigBee oder einer ähnlichen Kommunikationsverbindung bereitgestellt.

Vorzugsweise ist das Haushaltgerät zusätzlich zu der Bedienung durch die mobile Bedieneinrichtung und/oder insbesondere auch ausschließlich mittels einer ortsfesten Bedieneinrichtung, welche z. B. von einer Kochfeldeinrichtung bereitgestellt wird, steuerbar bzw. bedienbar.

In vorteilhaften Weiterbildungen umfasst die Bedieneinrichtung wenigstens eine Anzeigeeinrichtung und wenigstens ein Bedienelement. Insbesondere kann die Bedieneinrichtung auch wenigstens eine Anzeigeeinrichtung mit wenigstens einem Bedienelement umfassen. Vorzugsweise wird eine solche Anzeigeeinrichtung mit wenigstens einem Bedienelement von einem Touchdisplay und/oder Ähnlichem bereitgestellt.

Das erfindungsgemäße Verfahren zum Betreiben eines Haushaltgerätesystems hat viele Vorteile. Ein erheblicher Vorteil ist, dass das Haushaltgerät mittels der Bedieneinrichtung wenigstens zeitweise steuerbar ist, wenn die wenigstens eine Bedieneinrichtung in einem vorbestimmten Abstand zu dem wenigstens einem Haushaltgerät angeordnet wird und wenn wenigstens die erste und die zweite Sensoreinrichtung jeweils wenigstens eine vorbestimmte Handlung detektieren. Dadurch dass, wenigstens die drei zuvor genannten Bedingungen erfüllt sein müssen, um das Haushaltgerät mittels der mobilen Bedieneinrichtung wenigstens zeitweise zu steuern, wird ein besonders sicherer Betrieb eines Haushaltgerätes ermöglicht und insbesondere auch gesetzliche Normen zur Bedingung von Haushaltgeräten wie z. B. Kochfeldern, Kochgeschirr und/oder Gareinrichtungen erfüllt, welche eine Bedienung solcher Haushaltgeräte mittels einer mobilen Bedieneinrichtung aus der Ferne untersagen.

Des Weiteren ermöglicht das erfindungsgemäße Verfahren zum Betreiben eines Haushaltgerätesystems eine besonders intuitive, einfach durchzuführende und insbesondere von einem neuen Benutzer schnell zu erlernende Bedienung bzw. Steuerung eines Haushaltgerätes, denn die vorbestimmten Handlungen wie z. B eine abschnittsweise Berührung und/oder eine klopfende Bewegung sind besonders einfach von einem Benutzer auszuführen.

Insbesondere sind solche vorbestimmten Handlungen auch mit feuchten, verdreckten und/oder verklebten Fingern oder auch ganz ohne diese, z. B. wenn ein Benutzer einen Gegenstand in der Hand hält und seine Finger und/oder Hände zum Greifen dieses Gegenstandes benutzt, möglich, wodurch eine besonders benutzerfreundliche Freigabe eines Haushaltgerätesystems zur Steuerung erfolgen kann.

Insbesondere ermöglicht das erfindungsgemäße Verfahren auch eine besonders intuitive und einfach durchzuführende Steuerung mehrerer, insbesondere auch unterschiedlicher Haushaltgeräte mittels einer mobilen Bedieneinrichtung und/oder einen besonders intuitiven und/oder einfach durchzuführenden Wechseln zwischen mehreren Haushaltgeräten zur Steuerung mittels der Bedieneinrichtung.

Insbesondere die hier aufgeführten Punkte machen das erfindungsgemäße Verfahren zum Betreiben eines Haushaltgerätesystems besonders benutzerfreundlich.

Bevorzugt ist die mobile Bedieneinrichtung eine Smartwatch . Dabei ist unter einer Smartwatch insbesondere eine Armbanduhr zu verstehen, welche über zusätzliche Funktionen und/oder Sensoreinrichtungen und/oder Aktuatoreinrichtungen und/oder Computerfunktionalitäten verfügt und/oder wenigstens zeitweise auf solche Zugriff hat.

In der erfindungsgemäßen Ausgestaltung ist die Bedieneinrichtung und/oder die erste Sensoreinrichtung und/oder die zweite Sensoreinrichtung als Smartwatch oder als eine andere Form von Bodywear, beispielsweise in einem Kleidungsstück integriert ausgeführt sein. Besonders bevorzugt umfasst die erste und/oder die zweite Sensoreinrichtung wenigstens einen Beschleunigungssensor und/oder ein Bewegungssensor und/oder ein Erschütterungssensor, welcher wenigstens eine vorbestimmte Handlung detektiert. Dieses ermöglicht der ersten und/oder der zweiten Sensoreinrichtung eine besonders zuverlässige Detektion eine vorbestimmte Handlung und somit eine insbesondere zuverlässige und benutzerfreundliche Freigabe zur Steuerung des Haushaltgerätes mittels der Bedieneinrichtung. Dabei ist ein Beschleunigungssensor insbesondere ein Sensor zur Detektion einer Beschleunigung der Sensoreinrichtung, ein Bewegungssensor insbesondere ein Sensor zur Detektion einer Bewegung der Sensoreinrichtung und ein Erschütterungssensor insbesondere ein Sensor zur Detektion einer Erschütterung der Sensoreinrichtung.

In vorteilhaften Weiterbildungen umfasst die erste und/oder die zweite Sensoreinrichtung wenigstens einen Abstandssensor, welcher eine vorbestimmte Handlung detektiert. Vorzugsweise ermittelt der Abstandssensor wenigstens eine Abstandsänderung zwischen dem Haushaltgerät und der Bedieneinrichtung, woraus Rückschlüsse auf die Ausführung einer vorbestimmten Handlung gezogen und diese detektiert werden können.

In zweckmäßigen Weiterbildungen zieht die erste und/oder die zweite Sensoreinrichtung aus der detektierten Abstandsänderung Rückschlüsse auf eine vorbestimmte Handlung.

In einer nicht erfindungsgemäßen Ausgestaltung umfasst die erste Sensoreinrichtung wenigstens einen Berührungssensor zur Detektion wenigstens einer Berührung wenigstens eines Abschnittes des Haushaltgerätes umfasst. Dabei ist der Berührungssensor insbesondere ein kapazitiver Sensor.

Vorzugsweise ist der Berührungssensor wenigstens abschnittsweise an einer Griffeinrichtung des Haushaltgerätes aufgenommen und/oder in diese integriert.

In vorteilhaften Weiterbildungen umfasst auch die zweite Sensoreinrichtung wenigstens einen Berührungssensor zur Detektion wenigstens einer Berührung wenigstens eines Abschnittes der Bedieneinrichtung, insbesondere eines Touchdisplays und/oder eines Bedienelementes der Bedieneinrichtung.

Besonders bevorzugt detektieren die erste und die zweite Sensoreinrichtung dieselbe Handlung, woraufhin das Haushaltgerät und die Bedieneinrichtung wenigstens zeitweise zur Steuerung freigegeben werden. Eine solche Ausgestaltung ermöglicht eine besonders intuitive und benutzerfreundliche Freigabe zur Steuerung des Haushaltgeräts und der Bedieneinrichtung.

Vorzugsweise detektieren die erste und die zweite Sensoreinrichtung gleichzeitig, insbesondere mittels verschiedenere Sensoren dieselbe und/oder die gleiche Handlung. Zum Beispiel kann die erste Sensoreinrichtung beim Streicheln eines Griffes eines Haushaltgerätes vorzugsweise eine Berührung mittels eines Berührungssensors detektieren, während die zweite Sensoreinrichtung beim Streicheln des Griffes des Haushaltgerätes insbesondere eine Bewegung eines Handgelenkes mittels eines Bewegungssensors detektiert.

Bevorzugt sendet die Sende-/Empfangseinrichtung wenigstens ein Signal mit wenigstens einer Zuordnungssignatur an die Kommunikationseinrichtung der Bedieneinrichtung und/oder die Steuereinrichtung, wenn die erste Sensoreinrichtung eine vorbestimmte Handlung detektiert. Hierdurch kann der Bedieneinrichtung und/oder der Steuereinrichtung automatisch signalisiert werden, dass das Haushaltgerät zur Steuerung mittels der Bedieneinrichtung freigegeben ist, wodurch das Verfahren noch benutzerfreundlich wird.

Vorzugsweise dient die Zuordnungssignatur der Zuordnung des Haushaltgerätes zu der Bedieneinrichtung und/oder der Freigabe zur Bedingung des Haushaltgerätes mittels der Bedieneinrichtung.

In zweckmäßigen Weiterbildungen umfasst die Zuordnungssignatur wenigstens eine Freigabesignatur, mittels welcher insbesondere die Freigabe zur Bedingung des Haushaltgerätes verifiziert werden kann. Dies ermöglicht eine besonders sichere Bedienung des Haushaltgerätesystems.

In vorteilhaften Weiterbildungen sendet die Sende-/Empfangseinrichtung über den ersten Kommunikationskanal ein Signal mit Zuordnungssignatur. Dies kann vorzugsweise aber auch über einen zweiten Kommunikationskanal erfolgen.

Dabei wird der zweite Kommunikationskanal insbesondere von einer WLAN, ZigBee, und/oder ähnlichen Kommunikationsverbindung bereitgestellt. Insbesondere weist ein zweiter Kommunikationskanal eine hohe Signalübertragungsrate, insbesondere eine höher Signalverarbeitungsrate als die des ersten Kommunikationskanales auf.

Besonders bevorzugt sendet die Kommunikationseinrichtung wenigstens ein Signal mit wenigstens einer Zuordnungssignatur an das Haushaltgerät und/oder die Steuereinrichtung, wenn die zweite Sensoreinrichtung eine vorbestimmte Handlung detektiert.

Vorzugsweise dient die Zuordnungssignatur der Zuordnung der Bedieneinrichtung zu dem Haushaltgerät und/oder der Freigabe zur Bedingung des Haushaltgerätes mittels der Bedieneinrichtung.

In vorteilhaften Weiterbildungen umfasst die Zuordnungssignatur wenigstens eine Freigabesignatur, mittels welcher insbesondere die Freigabe zur Steuerung des Haushaltgerätes mittels der Bedieneinrichtung verifiziert werden kann.

Vorzugsweise sendet die Kommunikationseinrichtung über einen ersten Kommunikationskanal ein Signal mit Zuordnungssignatur. Dies kann vorzugsweise aber auch über einen zweiten Kommunikationskanal erfolgen.

Dabei wird der zweite Kommunikationskanal insbesondere von einer WLAN, ZigBee, und/oder ähnlichen Kommunikationsverbindung bereitgestellt. Insbesondere weist ein zweiter Kommunikationskanal eine hohe Signalübertragungsrate, insbesondere eine höher Signalverarbeitungsrate als die des ersten Kommunikationskanales auf.

Bevorzugt erfolgt mittels wenigstens einer Zuordnungssignatur eine automatische wenigstens zeitweise Zuordnung zwischen dem Haushaltgerätes und der Bedieneinrichtung.

Vorzugsweise erfolgt mittels wenigstens einer Zuordnungssignatur eine automatische wenigstens zeitweise Zuordnung des Haushaltgerätes zu der Bedieneinrichtung und/oder der Bedieneinrichtung zu dem Haushaltgerät.

In einer erfindungsgemäßen Ausgestaltung sendet wenigstens die Kommunikationseinrichtung wenigstens ein Signal mit wenigstens einer Verbindungssignatur aus, sodass eine automatische wenigstens zeitweise Integration des Haushaltgerätes in wenigstens einen zweiten Kommunikationskanal erfolgt.

Insbesondere kann mittels einer Verbindungssignatur eine automatische wenigstens zeitweise Integration des Haushaltgerätes in wenigstens einen zweiten Kommunikationskanal erfolgen.

In vorteilhaften Weiterbildungen weist der zweite Kommunikationskanal eine höhere Signalübertragungsrate als der erste Kommunikationskanal auf. Je nach Aufgabe und Ausgestaltung kann der zweite Kommunikationskanal vorzugsweise aber auch eine höhere Signalübertragungsrate als der erste Kommunikationskanal aufweisen.

Bevorzugt weist der zweite Kommunikationskanal eine größere Übertragungsreichweite als der erste Kommunikationskanal auf.

Insbesondere wird ein erster Kommunikationskanal von einer IR, NFC und/oder einer akustischen, insbesondere einer im Ultraschallbereich liegenden Signalverbindung bereitgestellt. In zweckmäßigen Weiterbildungen wird der zweite Kommunikationskanal von einer WLAN, ZigBee oder ähnlichen Kommunikationsverbindung bereitgestellt.

In einer weiteren Ausgestaltung ist das Haushaltgerät ein Kochgeschirr.

Vorzugsweise wird das Haushaltgerät wenigstens teilweise von einem Kochgeschirr bereitgestellt.

Dabei ist ein Kochgeschirr insbesondere ein Smartgeschirr, welches vorzugsweise dazu geeignet und ausgebildet ist, mit wenigstens einer Kochfeldeinrichtung zu kommunizieren. Bevorzugt weist das Smartgeschirr wenigstens einen Sensor und/oder wenigstens einen Aktuator auf.

Vorzugsweise tauscht das Kochgeschirr insbesondere mit einer Kochfeldeinrichtung drahtlos Informationen über z. B. seine Position, seine Funktionen, mögliche und/oder vorliegende Einstellung und/oder über wenigstens eine Eigenschaft aus.

Bevorzugt wir wenigstens ein Steuerprogramm mit grafischer Bedienoberfläche auf der Bedieneinrichtung geöffnet bzw. gestartet.

In zweckmäßigen Weiterbildungen wird ein Steuerprogramm mit grafischer Bedienoberfläche auf der Bedieneinrichtung geöffnet bzw. gestartet, wenn die Bedieneinrichtung innerhalb des vorbestimmten Abstand zu dem Haushaltsgerät angeordnet wird und/oder wenn, insbesondere die zweite Sensoreinrichtung eine vorbestimmte Handlung detektiert.

In vorteilhaften Weiterbildungen wird wenigstens ein Mikrofon zur Eingabe wenigstens eines Sprachbefehls automatisch bereitgestellt.

Vorzugsweise zeigt wenigstens eine Bedieneinrichtung wenigstens eine Eigenschaft/Funktion/Information, insbesondere des Haushaltgerätes an.

Besonders bevorzugt zeigt bei einem als Kochgeschirr ausgeführten Haushaltgerät die Bedieneinrichtung wenigstens eine der folgenden Eigenschaften, Funktionen und/oder Informationen insbesondere des Kochgeschirrs an: aktuelle Temperatur, aktuelles Gewicht, aktuelles Füllvolumen, den zeitlicher Verlauf der Temperatur, den zeitlicher Verlauf des Gewichtes und/oder den zeitlichen Verlauf des Füllvolumens, zur Verfügung stehende spezifische Funktionen wie z. B. Boosterfunktionen, geregelte Kochmodi, Betriebsarten und/oder Ablaufprogramme, (Rest)Dauer eines Ablaufprogramms und/oder eines Kochprozesses und/oder Anweisungen zu einem Kochschritt eines Kochrezeptes. Auch die Anzeige von Informationen von mit dem Haushaltsgerät verbundenen anderen Geräten, insbesondere einer mit einem Kochgeschirr verbundenen Kochfeldeinrichtung kann vorzugsweise erfolgen.

Bevorzugt regelt und/oder steuert die wenigstens eine Bedieneinrichtung das wenigstens eine Haushaltgerät.

Vorzugsweise sendet die Bedieneinrichtung zur Steuerung/Regelung des Haushaltgerätes wenigstens ein Signal als Steuersignal bzw. Steuerbefehl über den ersten und/oder den zweiten Kommunikationskanal an die Sende-/Empfangseinrichtung und/oder an die Steuereinrichtung.

In vorteilhaften Weiterbildungen steuert und/oder regelt die Bedieneinrichtung wenigstens eine Eigenschaft und/oder eine Funktion des Haushaltgerätes.

Insbesondere bei einem als Kochgeschirr ausgeführten Haushaltgerät steuert und oder regelt die Bedieneinrichtung wenigstens eine der folgenden Eigenschaften und/oder Funktionen: aktuelle Temperatur, zeitlicher Verlauf der Temperatur, Betriebsarten und/oder Ablaufprogramme, (Rest)Dauer eines Ablaufprogramms. Je nach Aufgabe und Ausgestaltung kann insbesondere ein als Kochgeschirr ausgebildetes Haushaltgerät vorzugsweise auch zusätzlich und/oder ausschließlich mittels einer Bedieneinrichtung einer Kochfeldeinrichtung gesteuert bzw. geregelt werden.

In zweckmäßigen Weiterbildungen kann auch eine Steuerung und/oder Regelung von mit dem Haushaltsgerät verbundenen anderen Geräten vorzugsweise erfolgen.

Bevorzugt verifiziert die wenigstens eine Steuereinrichtung wenigstens ein Steuersignal, welches an die wenigstens eine Sende-/Empfangseinrichtung gesendete wird.

Vorzugsweise verifiziert die Steuereinrichtung wenigstens ein Steuersignal bzw. Steuerbefehl, welches über den ersten Kommunikationskanal an die Sende-/Empfangseinrichtung gesendet wird, mittels der Zuordnungssignatur.

Besonders bevorzugt verifiziert die Steuereinrichtung wenigstens ein Steuersignal bzw. Steuerbefehl, welches über den zweiten Kommunikationskanal an die Sende-/Empfangseinrichtung gesendet wird, mittels der Zuordnungssignatur.

Das erfindungsgemäße Haushaltgerätesystem umfasst wenigstens eine mobile Bedieneinrichtung, wenigstens eine Steuereinrichtung und wenigstens ein Haushaltgerät. Dabei ist die Steuereinrichtung und/oder die Bedieneinrichtung dazu geeignet und ausgebildet, ein Verfahren wie es zuvor beschrieben wurde durchzuführen.

Auch das erfindungsgemäße Haushaltgerätesystem weist die Vorteile des erfindungsgemäßen Verfahrens zur Bedienung eines Haushaltgerätesystems auf.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Haushaltgerätesystems in einer perspektivischen Ansicht; und
- Figur 2: eine rein schematische Darstellung eines weiteren Ausführungsbeispiels eines erfindungsgemäßen Haushaltgerätesystems.

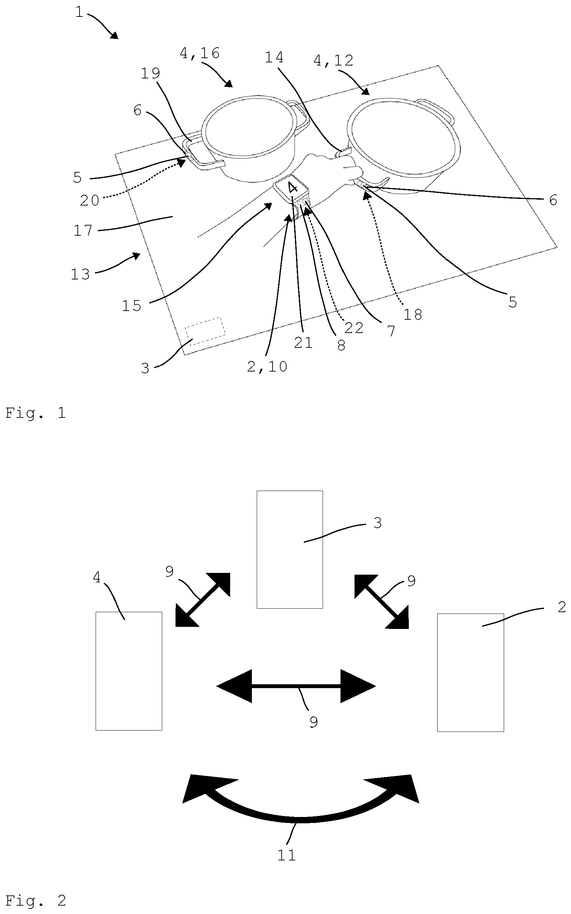

In Figur 1 ist rein schematisch ein Ausführungsbeispiel eines erfindungsgemäßen Haushaltgerätesystems 1 in einer perspektivischen Ansicht dargestellt.

Das Haushaltgerätesystem 1 umfasst hier eine mobile Bedieneinrichtung 2, welche hier als Smartwatch 10 ausgeführt ist, zwei Haushaltgeräte 4, welche hier jeweils als Kochgeschirr 12, 16 ausgeführt sind und eine Steuereinrichtung 3, welche hier von einer Kochfeldeinrichtung 13 bereitgestellt wird.

Die hier als jeweils als Kochgeschirr bzw. Smartgeschirr 12, 16 ausgeführten zwei Haushaltgeräte 4 sind hier auf eine Aufstelleinrichtung 17 der Kochfeldeinrichtung 13 aufgestellt und können hier mittels der hier nicht dargestellten von der Kochfeldeinrichtung 13 bereitgestellten Heizeinrichtungen erhitzt werden. Jede der hier als Kochgeschirr 12, 16 ausgeführten Haushaltgeräte 4 umfasst hier eine erste Sensoreinrichtung 6 zur Detektion einer Handlung und eine hier in die erste Sensoreinrichtung 6 integrierte Sende-/Empfangseinrichtung 5.

In dem hier dargestellten nicht erfindungsgemäßen Ausführungsbeispiel ist eine bzw. eine erste Sensoreinrichtung 6 des in einem rechten Abschnitt der Kochfeldeinrichtung 13 angeordneten Kochgeschirrs 12 in einer Griffeinrichtung 14 des Kochgeschirrs 12 integriert. Die erste Sensoreinrichtung 6 weist hier einen Berührungssensor 18 auf, welcher hier als ein kapazitiver Sensor ausgeführt ist. Der kapazitive Sensor ist hier dazu geeignet und ausgebildet, eine Berührung der Griffeinrichtung 14 durch z. B. eine Hand eines Benutzers zu detektieren.

Die erste Sensoreinrichtung 6 des hier in einem linken Abschnitt der Kochfeldeinrichtung 13 angeordneten Kochgeschirrs 16 ist hier ebenfalls in die Griffeinrichtung 19 des Kochgeschirrs 16 integriert. Die Sensoreinrichtung 6 weist hier einen Erschütterungssensor 20 auf. Der Erschütterungssensor 20 ist hier dazu geeignet und ausgebildet, eine Erschütterung der Griffeinrichtung 19 verursacht durch z. B. ein Klopfen eines Benutzers an die Griffeinrichtung 19 zu detektieren. Je nach Aufgabe und Ausgestaltung kann der Erschütterungssensor 10 auch dazu geeignet und ausgebildet, eine Erschütterung des Kochgeschirrs 16 zu detektieren.

Jede der hier von den zwei Kochgeschirren 12, 16 aufgenommenen Sende-/Empfangseinrichtungen 5 ist in dem gezeigten Ausführungsbeispiel dazu geeignet und ausgebildet, mit der Steuereinrichtung 3 und der mobilen Bedieneinrichtung 2 über einen ersten Kommunikationskanal 9 zu kommunizieren. Dabei ist hier der erste Kommunikationskanal 9 eine Bluetoothverbindung. Je nach Aufgabe und Ausgestaltung kann der erste Kommunikationskanal 9 auch von einer WLAN-Verbindung, einem NFC oder einer ähnlich geeigneten Kommunikationsverbindung bereitgestellt werden.

In dem hier dargestellten Ausführungsbeispiel ist die als Smartwatch 10 ausgeführte mobile Bedieneinrichtung 2 an einem Arm 15 eines Benutzers angeordnet. Die Smartwatch 10 umfasst hier eine zweite Sensoreinrichtung 8 zur Detektion einer Handlung, ein hier als Touchdisplay ausgeführte Anzeigeeinrichtung 21 mit einem Bedienelement und eine hier in die zweite Sensoreinrichtung 8 integrierte Kommunikationseinrichtung 7.

Die Kommunikationseinrichtung 7 ist hier dazu geeignet und ausgebildet, mit der Steuereinrichtung 3 und den Sende-/Empfangseinrichtungen 5 der zwei hier als Kochgeschirre 12, 16 ausgeführten Haushaltgeräte 4 über einen ersten Kommunikationskanal 9 zu kommunizieren. Dabei ist hier der erste Kommunikationskanal 9 eine Bluetoothverbindung.

Die zweite Sensoreinrichtung 8 umfasst hier einen Bewegungssensor 22, welcher hier dazu geeignet und ausgebildet, eine Bewegung der Smartwatch 10 zu detektieren. Somit kann in dem hier dargestellten Ausführungsbeispiel die Smartwatch 10 eine Bewegung des Armes 15 detektieren.

In dem hier dargestellten Ausführungsbeispiel sind mittels des Touchdisplays mehrere Eigenschaften und Funktion wie z. B. wie z. B. eine Temperatur und ein Ablaufprogramm der zwei hier als Kochgeschirr 12, 16 ausgeführten Haushaltgeräte 4 einstellbar.

Gemäß des erfindungsgemäßen Verfahrens zum Betreiben eines Haushaltgerätesystems 1 kann das Haushaltgerät 4 mittels der Bedienung 2 gesteuert werden, wenn die hier als Smartwatch ausgeführte Bedieneinrichtung 2 in einem vorbestimmten Abstand zu einem hier als Kochgeschirr 12, 16 ausgeführten Haushaltgerät 4 angeordnet wird und wenn die erste und die zweite Sensoreinrichtung 6, 8 jeweils eine vorbestimmte Handlung detektieren.

Um diese Bedingungen zu erfüllen und das in einem rechten Abschnitt der Kochfeldeinrichtung 13 aufgestellten Kochgeschirr 12 mittels einer als Smartwatch 10 ausgeführten mobilen Bedieneinrichtung 2 zu steuern, wird in dem hier dargestellten Ausführungsbeispiel die Smartwatch 10 durch einen Benutzer in einem Abstand von weniger als 20 cm zu dem in einem rechten Abschnitt der Kochfeldeinrichtung 13 aufgestellten Kochgeschirr 12 angeordnet. Der Benutzer umgreift hier abschnittsweise die Griffeinrichtung 14 des rechten Kochgeschirrs 12 und führt hier eine streichelnde Bewegung aus. Eine solche Handlung, insbesondere die abschnittsweise Berührung der Griffeinrichtung 14 wird hier von der ersten Sensoreinrichtung 6 mittels des Berührungssensors 18 detektiert und das Kochgeschirr 12 hier zur Steuerung bzw. Bedienung durch die hier als Smartwatch 10 ausgeführte mobile Bedieneinrichtung 2 freigegeben. Die zuvor beschriebene Handlung, insbesondere die streichelnde Bewegung wird hier von der zweiten Sensoreinrichtung 8 mittels des Bewegungssensors 21 detektiert und die Smartwatch 10 hier zur Steuerung bzw. Bedienung des hier als Kochgeschirr 12 ausgeführten Haushaltgerätes 4 freigegeben.

In dem hier dargestellten Ausführungsbeispiel wird bei Detektion der zuvor beschriebenen Handlung, insbesondere der streichelnden Bewegung mittels des Bewegungssensors 21 der zweiten Sensoreinrichtung 8 ein Steuerprogramm mit grafischer Bedienoberfläche auf der mobilen Bedieneinrichtung 2 geöffnet bzw. gestartet.

Die grafische Bedienoberfläche, welche hier auf dem Touchdisplay dargestellt wird, zeigt hier eine Eigenschaft des Kochgeschirrs 12 an. Je nach Aufgabe und Ausgestaltung kann die Bedieneinrichtung 2 und insbesondere die grafische Bedienoberfläche auch eine Eigenschaft der Kochfeldeinrichtung 13 wie z. B. eine Betriebsstufe der unterhalb des Kochgeschirrs 12 angeordneten Heizeinrichtung anzeigen.

Ist wie in dem hier dargestellten Ausführungsbeispiel die hier als Smartwatch 10 ausgeführte Bedieneinrichtung 2 im vorbestimmten Abstand zu dem hier als Kochgeschirr 12 ausgeführten Haushaltgerät 4 angeordnet und haben die erste und die zweite Sensoreinrichtung 6, 8 die hier durch das abschnittsweise Umgreifen der Griffeinrichtung 14 und die streichelnde Bewegung gegebene Handlung detektiert, kann hier das Kochgeschirr 12 mittels der Smartwatch 10 gesteuert werden.

Hier kann mittels der Smartwatch 10 z. B. die Temperatur des Kochgeschirrs 12 und/oder die Betriebsstufe der hier unterhalb des Kochgeschirrs 12 angeordneten Heizeinrichtung gesteuert werden.

In dem hier dargestellten Ausführungsbeispiel ist es auch möglich, das zu steuernde bzw. zu bedienende Haushaltgerät 4 zu wechseln. Hierzu wird die hier als Smartwatch 10 ausgeführte Bedieneinrichtung 2 in dem vorbestimmten Abstand zu dem hier in einem linken Abschnitt der Kochfeldeinrichtung 13 aufgestellten Kochgeschirrs 16 angeordnet. Der Benutzer klopft z. B. als Geste hier mit seinem Arm bzw. Hand 15, an welcher sich die Smartwatch 10 befindet an die Griffeinrichtung 19 des linken Kochgeschirrs 16. Eine solche Handlung, wird hier von der ersten Sensoreinrichtung 6 des linken Kochgeschirrs 16 mittels des Erschütterungssensors 20 detektiert und das linke Kochgeschirr 16 hier zur Steuerung bzw. Bedienung durch die hier als Smartwatch 10 ausgeführte mobile Bedieneinrichtung 2 freigegeben. Die klopfende Bewegung wird hier von der zweiten Sensoreinrichtung 8 mittels des Bewegungssensors 22 detektiert und die Smartwatch 10 hier zur Steuerung bzw. Bedienung des hier als Kochgeschirr 16 ausgeführten linken Haushaltgerätes 4 freigegeben.

Somit kann hier das linke Haushaltgerät 4, 16 mittels der Smartwatch 10 gesteuert werden.

In Figur 2 ist rein schematisch ein weiteres Ausführungsbeispiel eines erfindungsgemäßen Haushaltgerätesystems 1 dargestellt.

Hier umfasst das Haushaltgerätesystem 1 ein Haushaltgerät 4 mit einer ersten Sensoreinrichtung 6 und mit eine Sende-/Empfangseinrichtung 5, eine Steuereinrichtung 3 und eine mobile Bedieneinrichtung 2 mit einer zweiten Sensoreinrichtung 8 und einer Kommunikationseinrichtung 7.

In dem hier dargestellten Ausführungsbeispiel kann gemäß eines erfindungsgemäßen Verfahrens zum Betreiben eines Haushaltgerätesystems 1 das Haushaltgerät 4 mittels der Bedienung 2 gesteuert werden, wenn die Bedieneinrichtung 2 in einem vorbestimmten Abstand zu dem Haushaltgerät 4 angeordnet wird und wenn die erste und die zweite Sensoreinrichtung 6, 8 jeweils eine vorbestimmte Handlung detektieren. Diese Bedingungen sind hier erfüllt. Die Bedieneinrichtung 2 ist hier in einem vorbestimmten Abstand zu dem Haushaltgerät 4 angeordnet und die erste und die zweite Sensoreinrichtung 6, 8 haben jeweils eine vorbestimmte Handlung detektiert.

Beim Detektieren der vorbestimmten Handlung durch die erste Sensoreinrichtung 6 gibt hier die erste Sensoreinrichtung 6 das Haushaltgerät 4 zur Steuerung durch die Bedieneinrichtung 2 frei und die Sende-/Empfangseinrichtung 5 sendet hier ein Signal mit einer Zuordnungssignatur über den ersten Kommunikationskanal 9 an die Steuereinrichtung 3 und an die Kommunikationseinrichtung 7 der Bedieneinrichtung 2.

Beim Detektieren der vorbestimmten Handlung durch die zweite Sensoreinrichtung 8 gibt hier die zweite Sensoreinrichtung 8 die Bedieneinrichtung 2 zur Steuerung des Haushaltgerät 4 frei und die Kommunikationseinrichtung 7 sendet hier ein Signal mit einer Zuordnungssignatur über den ersten Kommunikationskanal 9 an die Steuereinrichtung 3 und an die Sende-/Empfangseinrichtung 5 des Haushaltgerätes 4.

Dabei wird hier der erste Kommunikationskanal 9 von einer Bluetoothverbindung bereitgestellt. Je nach Aufgabe und Ausgestaltung kann dieser aber auch von einer WLAN, NFC, IR und/oder einer akustischen Kommunikationsverbindung bereitgestellt werden.

Mittels der hier von der Kommunikationseinrichtung 7 übermittelten Zuordnungssignatur und der hier von der Sende-/Empfangseinrichtung 5 übermittelten Zuordnungssignatur erfolgt hier eine automatische zeitweise Zuordnung zwischen dem Haushaltgerätes 4 und der Bedieneinrichtung 2. Je nach Aufgabe und Ausgestaltung kann auch mittels nur einer Zuordnungssignatur eine automatische zeitweise Zuordnung zwischen dem Haushaltgerätes 4 und der Bedieneinrichtung 2 erfolgen.

In dem hier dargestellten Ausführungsbeispiel bleibt die Zuordnung zwischen dem Haushaltgerätes 4 und der Bedieneinrichtung 2 für eine Zeitspanne von z. B. 5 min erhalten. Anschließend wird die Zuordnung zwischen dem Haushaltgerätes 4 und der Bedieneinrichtung 2 aufgehoben bzw. gelöscht und durch eine erneut ausgesendete neue Zuordnungssignatur erfolgt eine erneute Zuordnung zwischen dem Haushaltgerätes 4 und der Bedieneinrichtung 2.

In dem hier dargestellten Ausführungsbeispiel sendet die Kommunikationseinrichtung 7 zusätzlich zu der Zuordnungssignatur ein Signal mit wenigstens einer Verbindungssignatur an das Haushaltgerät 4, mittels welcher hier das Haushaltgerät automatische in einen zweiten Kommunikationskanal 11 integriert wird, sodass die Sende-/Empfangseinrichtung 5 und die Kommunikationseinrichtung 7 zusätzlich zu dem ersten Kommunikationskanal 9 über den zweiten Kommunikationskanal 11 kommunizieren können.

Dabei wird hier der zweite Kommunikationskanal 11 von einer WLAN-Verbindung bereitgestellt, welche hier eine höhere Signalübertragungsrate als der hier von einer Bluetoothverbindung bereitgestellte erste Kommunikationskanal 9 aufweist. Je nach Aufgabe und Ausgestaltung kann der zweite Kommunikationskanal 11 aber auch von einer Bluetooth, NFC, IR und/oder einer akustischen Kommunikationsverbindung bereitgestellt werden.

Die Bedieneinrichtung 2 sendet hier zur Steuerung des Haushaltgerätes 4 ein Steuersignal an die Steuereinrichtung 3. Die Steuereinrichtung 3 verifiziert hier mittels der an die Steuereinrichtung 3 von der Kommunikationseinrichtung 7 und die Sende-/Empfangseinrichtung 5 übermittelten Zuordnungssignaturen das Steuersignal. Bestätigt hier die Steuereinrichtung 3, dass das Haushaltgerät 4 zur Steuerung durch die Bedieneinrichtung 2 freigegeben und der Bedieneinrichtung 2 zugeordnet ist und dass die Bedieneinrichtung 2 zur Steuerung des Haushaltgerätes 4 freigegeben und dem Haushaltgerät 4 zugeordnet ist, sendet hier die Steuereinrichtung 3 das Steuersignal an das Haushaltgerät 4 und das Steuersignal wird hier ausgeführt.

### Bezugszeichenliste

- 1: Haushaltgerätesystem
- 2: Bedieneinrichtung
- 3: Steuereinrichtung
- 4: Haushaltgerät
- 5: Sende-/Empfangseinrichtung
- 6: erste Sensoreinrichtung
- 7: Kommunikationseinrichtung
- 8: zweite Sensoreinrichtung
- 9: erster Kommunikationskanal
- 10: Smartwatch
- 11: zweiter Kommunikationskanal
- 12: Kochgeschirr
- 13: Kochfeldeinrichtung
- 14: Griffeinrichtung
- 15: Arm
- 16: Kochgeschirr
- 17: Aufstelleinrichtung
- 18: Berührungssensor
- 19: Griffeinrichtung
- 20: Erschütterungssensor
- 21: Anzeigeeinrichtung
- 22: Bewegungssensor

## Patentansprüche

1. Verfahren zum Betreiben eines Haushaltgerätesystems (1) umfassend wenigstens eine mobile Bedieneinrichtung (2), wenigstens eine Steuereinrichtung (3), und wenigstens ein Haushaltgerät (4), wobei das Haushaltgerät (4) wenigstens eine Sende-/Empfangseinrichtung (5) und wenigstens eine erste Sensoreinrichtung (6) zur Detektion wenigstens einer Handlung umfasst, wobei die mobile Bedieneinrichtung (2) wenigstens eine Kommunikationseinrichtung (7) und wenigstens eine zweite Sensoreinrichtung (8) zur Detektion wenigstens einer Handlung umfasst, wobei die wenigstens eine Sende-/Empfangseinrichtung (5) und die wenigstens eine Kommunikationseinrichtung (7) dazu geeignet und ausgebildet sind, wenigstens zeitweise drahtlos miteinander und/oder mit der wenigstens einen Steuereinrichtung (3) über wenigstens einen ersten Kommunikationskanal (9) drahtlos zu kommunizieren, wobei wenigstens eine Eigenschaft und/oder eine Funktion des Haushaltgerätes (4) mittels der Bedieneinrichtung (2) einstellbar ist,
wobei das Haushaltgerät (4) mittels der Bedienung (2) wenigstens zeitweise steuerbar ist, wenn die wenigstens eine Bedieneinrichtung (2) in einem vorbestimmten Abstand zu dem wenigstens einem Haushaltgerät (4) angeordnet wird und wenn wenigstens die erste und die zweite Sensoreinrichtung (6, 8) jeweils wenigstens eine vorbestimmte Handlung detektieren,
wobei die erste und/oder die zweite Sensoreinrichtung (6, 8) wenigstens einen Beschleunigungssensor und/oder ein Bewegungssensor und/oder ein Erschütterungssensor umfasst, welcher wenigstens eine vorbestimmte Handlung detektiert,
wobei die vorbestimmte Handlung eine Berührung des Haushaltgeräts (4), insbesondere ein Streicheln und/oder ein Streichen und/oder ein Klopfen und/oder ein Antippen ist, welche gleichermaßen von der Sensoreinrichtung (6) des Haushaltgeräts (4) und von der Sensoreinrichtung (8) der mobilen Bedieneinrichtung (2) erfasst wird,
oder
wobei die vorbestimmte Handlung eine gerichtete Annäherung bzw. hinführende Bewegung ist, welche von der Sensoreinrichtung (8) der mobilen Bedieneinrichtung (2) erfasst wird, wobei ein detektierter Bewegungsvektor auf den Standort des Haushaltgeräts (4) ausgerichtet ist,
**dadurch gekennzeichnet, dass**
die mobile Bedieneinrichtung (2) und/oder die zweite Sensoreinrichtung (8) als eine Smartwatch (10) oder ein Bodywear-Artikel ausgeführt ist.

2. Verfahren zum Betreiben eines Haushaltgerätesystems (1) nach Anspruch 1, **dadurch gekennzeichnet, dass** die erste und/oder die zweite Sensoreinrichtung (6, 8) wenigstens einen Abstandssensor umfasst, welcher eine vorbestimmte Handlung detektiert.

3. Verfahren zum Betreiben eines Haushaltgerätesystems (1) nach einem der vorhergehenden Ansprüche, **dadurch gekennzeichnet, dass** die erste und die zweite Sensoreinrichtung (6, 8) dieselbe Handlung detektieren, woraufhin das Haushaltgeräts (4) und die Bedieneinrichtung (2) wenigstens zeitweise zur Steuerung freigegeben werden.

4. Verfahren zum Betreiben eines Haushaltgerätesystems (1) nach einem der vorhergehenden Ansprüche, **dadurch gekennzeichnet, dass** die Sende-/Empfangseinrichtung (5) wenigstens ein Signal mit wenigstens einer Zuordnungssignatur an die Kommunikationseinrichtung (7) der Bedieneinrichtung (2) und/oder die Steuereinrichtung (3) sendet, wenn die erste Sensoreinrichtung (6) eine vorbestimmte Handlung detektiert.

5. Verfahren zum Betreiben eines Haushaltgerätesystems (1) nach einem der vorhergehenden Ansprüche, **dadurch gekennzeichnet, dass** die Kommunikationseinrichtung (7) wenigstens ein Signal mit wenigstens einer Zuordnungssignatur an das Haushaltgerät (4) und/oder die Steuereinrichtung (3) sendet, wenn die zweite Sensoreinrichtung (8) eine vorbestimmte Handlung detektiert.

6. Verfahren zum Betreiben eines Haushaltgerätesystems (1) nach einem der vorhergehenden Ansprüche, **dadurch gekennzeichnet, dass** mittels wenigstens einer Zuordnungssignatur eine automatische wenigstens zeitweise Zuordnung zwischen dem Haushaltgerätes (4) und der Bedieneinrichtung (2) erfolgt.

7. Verfahren zum Betreiben eines Haushaltgerätesystems (1) nach einem der vorhergehenden Ansprüche, **dadurch gekennzeichnet, dass** wenigstens ein Steuerprogramm mit grafischer Bedienoberfläche auf der Bedieneinrichtung (2) geöffnet/gestartet wird.

8. Verfahren zum Betreiben eines Haushaltgerätesystems (1) nach einem der vorhergehenden Ansprüche, **dadurch gekennzeichnet, dass** die wenigstens eine Bedieneinrichtung (2) das wenigstens eine Haushaltgerät (4) regelt und/oder steuert.

9. Verfahren zum Betreiben eines Haushaltgerätesystems (1) nach einem der vorhergehenden Ansprüche, **dadurch gekennzeichnet, dass** die wenigstens eine Steuereinrichtung (3) wenigstens ein Steuersignal, welches an die wenigstens eine Sende-/Empfangseinrichtung (5) gesendete wird, verifiziert.

10. Haushaltgerätesystem (1) welches zur Durchführung eines Verfahrens nach einem der vorhergehenden Ansprüche geeignet und ausgebildet ist.

## Claims

1. Method for operating a domestic appliance system (1) comprising at least one mobile operating device (2), at least one control device (3), and at least one domestic appliance (4), the domestic appliance (4) comprising at least one transmitting/receiving device (5) and at least one first sensor device (6) for detecting at least one action, the mobile operating device (2) comprising at least one communication device (7) and at least one second sensor device (8) for detecting at least one action, the at least one transmitting/receiving device (5) and the at least one communication device (7) being suitable and designed for at least temporarily wirelessly communicating with one another and/or with the at least one control device (3) via at least one first communication channel (9), it being possible to adjust at least one property and/or one function of the domestic appliance (4) by means of the operating device (2),
it being possible to at least temporarily control the domestic appliance (4) by means of the operation (2) when the at least one operating device (2) is arranged at a predetermined distance from the at least one domestic appliance (4) and when at least the first and the second sensor device (6, 8) each detect at least one predetermined action,
the first and/or the second sensor device (6, 8) comprising at least one acceleration sensor and/or one movement sensor and/or one vibration sensor, which detects at least one predetermined action,
the predetermined action being a touch on the domestic appliance (4), in particular a stroke and/or a swipe and/or a tap and/or a press, which is recorded both by the sensor device (6) of the domestic appliance (4) and by the sensor device (8) of the mobile operating device (2),
or
the predetermined action being a directed approach or guiding movement which is recorded by the sensor device (8) of the mobile operating device (2), a detected movement vector being aligned with the location of the domestic appliance (4),
**characterised in that**
the mobile operating device (2) and/or the second sensor device (8) is designed as a smartwatch (10) or an item of bodywear.

2. Method for operating a domestic appliance system (1) according to claim 1, **characterised in that** the first and/or the second sensor device (6, 8) comprises at least one distance sensor which detects a predetermined action.

3. Method for operating a domestic appliance system (1) according to either of the preceding claims, **characterised in that** the first and the second sensor device (6, 8) detect the same action, whereupon the domestic appliance (4) and the operating device (2) are at least temporarily released for control.

4. Method for operating a domestic appliance system (1) according to any of the preceding claims, **characterised in that** the transmitting/receiving device (5) transmits at least one signal having at least one assignment signature to the communication device (7) of the operating device (2) and/or to the control device (3) when the first sensor device (6) detects a predetermined action.

5. Method for operating a domestic appliance system (1) according to any of the preceding claims, **characterised in that** the communication device (7) transmits at least one signal having at least one assignment signature to the domestic appliance (4) and/or to the control device (3) when the second sensor device (8) detects a predetermined action.

6. Method for operating a domestic appliance system (1) according to any of the preceding claims, **characterised in that,** by means of at least one assignment signature, an automatic, at least temporary assignment between the domestic appliance (4) and the operating device (2) takes place.

7. Method for operating a domestic appliance system (1) according to any of the preceding claims, **characterised in that** at least one control program is opened/started on the operating device (2) by using a graphical user interface.

8. Method for operating a domestic appliance system (1) according to any of the preceding claims, **characterised in that** the at least one operating device (2) controls the at least one domestic appliance (4) in an open-loop and/or closed-loop manner.

9. Method for operating a domestic appliance system (1) according to any of the preceding claims, **characterised in that** the at least one control device (3) verifies at least one control signal which is transmitted to the at least one transmitting/receiving device (5).

10. Domestic appliance system (1) which is suitable and designed for carrying out a method according to any of the preceding claims.

## Revendications

1. Procédé permettant de faire fonctionner un système à appareil électroménager (1) comprenant au moins un dispositif de manipulation (2) mobile, au moins un dispositif de commande (3) et au moins un appareil électroménager (4), dans lequel l'appareil électroménager (4) comprend au moins un dispositif d'émission/réception (5) et au moins un premier dispositif formant capteur (6) pour la détection d'au moins une action, dans lequel le dispositif de manipulation (2) mobile comprend au moins un dispositif de communication (7) et au moins un second dispositif formant capteur (8) pour la détection d'au moins une action, dans lequel l'au moins un dispositif d'émission/réception (5) et l'au moins un dispositif de communication (7) sont appropriés et configurés pour communiquer sans fil au moins temporairement l'un avec l'autre et/ou avec l'au moins un dispositif de commande (3) par l'intermédiaire d'au moins un premier canal de communication (9), dans lequel au moins une propriété et/ou une fonction de l'appareil électroménager (4) peuvent être réglées au moyen du dispositif de manipulation (2),
dans lequel l'appareil électroménager (4) peut être commandé au moins temporairement au moyen de la manipulation (2) lorsque l'au moins un dispositif de manipulation (2) est disposé à une distance prédéfinie de l'au moins un appareil électroménager (4) et lorsqu'au moins le premier et le second dispositif formant capteur (6, 8) détectent respectivement au moins une action prédéfinie,
dans lequel le premier et/ou le second dispositif formant capteur (6, 8) comprennent au moins un capteur d'accélération et/ou un capteur de mouvement et/ou un capteur de vibration, lesquels détectent au moins une action prédéfinie,
dans lequel l'action prédéfinie est un contact de l'appareil électroménager (4), en particulier une caresse et/ou un effleurement et/ou un tapotement et/ou un appui, lequel contact est détecté de la même manière par le dispositif formant capteur (6) de l'appareil électroménager (4) et par le dispositif formant capteur (8) du dispositif de manipulation (2) mobile,
ou
dans lequel l'action prédéfinie est un rapprochement dirigé ou un mouvement de rapprochement, lequel est détecté par le dispositif formant capteur (8) du dispositif de manipulation (2) mobile, dans lequel un vecteur de mouvement détecté est dirigé vers l'emplacement de l'appareil électroménager (4),
**caractérisé en ce que**
le dispositif de manipulation (2) mobile et/ou le second dispositif formant capteur (8) sont réalisés sous forme de montre intelligente (10) ou d'un article porté à même la peau.

2. Procédé permettant de faire fonctionner un système à appareil électroménager (1) selon la revendication 1, **caractérisé en ce que** le premier et/ou le second dispositif formant capteur (6, 8) comprennent au moins un capteur de proximité qui détecte une action prédéfinie.

3. Procédé permettant de faire fonctionner un système à appareil électroménager (1) selon l'une des revendications précédentes,
**caractérisé en ce que** le premier et le second dispositif formant capteur (6, 8) détectent la même action, après quoi l'appareil électroménager (4) et le dispositif de manipulation (2) sont libérés au moins temporairement pour la commande.

4. Procédé permettant de faire fonctionner un système à appareil électroménager (1) selon l'une des revendications précédentes,
**caractérisé en ce que** le dispositif d'émission/réception (5) envoie au moins un signal comportant au moins une signature d'association au dispositif de communication (7) du dispositif de manipulation (2) et/ou au dispositif de commande (3) lorsque le premier dispositif formant capteur (6) détecte une action prédéfinie.

5. Procédé permettant de faire fonctionner un système à appareil électroménager (1) selon l'une des revendications précédentes,
**caractérisé en ce que** le dispositif de communication (7) envoie au moins un signal comportant au moins une signature d'association à l'appareil électroménager (4) et/ou au dispositif de commande (3) lorsque le second dispositif formant capteur (8) détecte une action prédéfinie.

6. Procédé permettant de faire fonctionner un système à appareil électroménager (1) selon l'une des revendications précédentes,
**caractérisé en ce qu'**une association automatique au moins temporaire entre l'appareil électroménager (4) et le dispositif de manipulation (2) est effectuée au moyen d'au moins une signature d'association.

7. Procédé permettant de faire fonctionner un système à appareil électroménager (1) selon l'une des revendications précédentes,
**caractérisé en ce qu'**au moins un programme de commande comportant une interface utilisateur graphique est ouvert/démarré sur le dispositif de manipulation (2).

8. Procédé permettant de faire fonctionner un système à appareil électroménager (1) selon l'une des revendications précédentes,
**caractérisé en ce que** l'au moins un dispositif de manipulation (2) régule et/ou commande l'au moins un appareil électroménager (4).

9. Procédé permettant de faire fonctionner un système à appareil électroménager (1) selon l'une des revendications précédentes,
**caractérisé en ce que** l'au moins un dispositif de commande (3) vérifie au moins un signal de commande envoyé à l'au moins un dispositif d'émission/réception (5).

10. Système à appareil électroménager (1) approprié et configuré pour la mise en œuvre d'un procédé selon l'une des revendications précédentes.
